(19) Europäisches Patentamt
European Patent Office
Office européen des brevets

(11) **EP 2 913 516 A1**

(12) **EUROPEAN PATENT APPLICATION**
published in accordance with Art. 153(4) EPC

(43) Date of publication:
**02.09.2015 Bulletin 2015/36**

(51) Int Cl.:
**F02N 11/08** (2006.01)    **F02N 15/00** (2006.01)

(21) Application number: **13843808.0**

(86) International application number:
**PCT/JP2013/075786**

(22) Date of filing: **25.09.2013**

(87) International publication number:
**WO 2014/054471 (10.04.2014 Gazette 2014/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.10.2012 JP 2012222212**

(71) Applicant: **Hitachi Automotive Systems, Ltd.**
**Hitachinaka-shi, Ibaraki 312-8503 (JP)**

(72) Inventors:
• **KUNIYOSHI Hiroyasu**
**Tokyo 100-8280 (JP)**

• **NAGASAWA Yoshiaki**
**Hitachinaka-shi**
**Ibaraki 312-0062 (JP)**
• **OMATA Shigehiko**
**Hitachinaka-shi**
**Ibaraki 312-8503 (JP)**
• **WATANABE Masanori**
**Tokyo 100-8280 (JP)**
• **NISHIOKA Akira**
**Tokyo 100-8280 (JP)**

(74) Representative: **MERH-IP**
**Matias Erny Reichl Hoffmann**
**Paul-Heyse-Strasse 29**
**80336 München (DE)**

(54) **ENGINE STARTING DEVICE AND STARTING METHOD**

(57)    An engine starter and starting method with which a starter drive prohibited interval can be reduced and the restart time can be brought earlier to the maximum possible limit, while the wear on the starter and the load thereupon are kept down within an allowable range, are provided. A starter (101) includes a magnetic switch (102), a pinion gear (103), and a motor body (105). A control device (109) prohibits, in a reverse rotation region directly before an engine stops completely when being stopped automatically, starting of shifting of the pinion gear during an interval of equal to or less than a predetermined negative rotation that is taken as a starter drive prohibited interval; and starts, in a region other than the starter drive prohibited interval, shifting of the pinion gear immediately in response to an engine restart request, thus connecting the pinion gear with the ring gear and starting the engine, and controls restarting of the engine on the basis of the engine rotational speed detected by an engine rotation sensor (110).

FIG.2

```
         ┌──────────────────┐
         │ ENGINE RESTART   │ ～ S201
         │ REQUEST          │
         └────────┬─────────┘
                  ▼
         ┌──────────────────┐
         │ PREDICT FUTURE ENGINE │ ～ S202
         │ ROTATIONAL SPEED Ne' │
         └────────┬─────────┘
                  ▼
No            ◇ Ne' > Ne_ref ◇ ～ S203
                  │ Yes
                  ▼
         ┌──────────┐
         │  DRIVE   │ ～ S204
         │ STARTER  │
         └────┬─────┘
              ▼
No    ◇ DETERMINE WHETHER ENGINE ◇ ～ S205
      ◇ STARTING HAS BEEN COMPLETED? ◇
              │ Yes
              ▼
      ┌──────────────────┐
      │ STOP DRIVING STARTER │ ～ S206
      └────────┬─────────┘
               ▼
      ┌──────────────────┐
      │ ENGINE STARTING  │
      │ COMPLETED        │
      └──────────────────┘
```

**Description**

TECHNICAL FIELD

The present invention relates to an engine starter and to an engine starting method, and more particularly relates to an engine starter and to an engine starting method that are appropriately used in an automobile that employs an idling stop system.

BACKGROUND ART

In recent years idling stop systems have been mounted to some automobiles with the objective of economizing upon energy resources and preservation of the environment, and such a system automatically stops the engine when some predetermined condition becomes valid. Such an idling stop system, for example, automatically stops the engine when the driver has stopped the vehicle to wait for a signal or the like, and subsequently automatically restarts the engine when operation of the engine has become necessary due to driver action or the like. A starter motor of the so-called pinion gear push-out type is employed for this engine restarting, and there are many methods for, during starting, the pinion gear to be pushed out so that the pinion gear is meshed with a ring gear that is directly coupled to the engine shaft, with the engine then being started by cranking being performed with the starter motor.

It is per se known that, when the engine is thus being automatically stopped, directly before the engine stops completely, it may rotate in reverse for a short period (subsequently, this will be termed the "engine reverse rotation interval"). If a restart request by the driver is received during this engine reverse rotation interval, then, if the pinion gear of the starter is immediately meshed with the ring gear during reverse rotation in response to this restart request, in some cases it may happen that excessive wear of the gears takes place, or that an excessive load is imposed upon the starter.

Thus, in the prior art, a system is per se known in which reverse rotation of the engine is detected, and driving of the starter is prohibited when the engine is rotating in reverse (for example, refer to Patent Document #1). Moreover, a system is also per se known in which the engine reverse rotation interval (the interval over which reverse torque operates) is estimated, and, in a similar manner, driving of the starter is prohibited during the engine reverse rotation interval (for example, refer to Patent Document #2).

CITATION LIST

PATENT LITERATURE

PTL 1: Japanese Laid-Open Patent Publication 2005-140030.
PTL 2: Japanese Laid-Open Patent Publication 2009-2202.

SUMMARY OF INVENTION

TECHNICAL PROBLEM

However, with the systems described in Patent Documents #1 and #2, since such a starter drive prohibited interval is provided, accordingly, even if an engine restart request is received during this interval due to the driver performing operation to start the vehicle off from rest, still it is not possible to restart the engine until the starter drive prohibited interval ends.

The object of the present invention is to provide an engine starter and an engine starting method, that are capable of reducing the starter drive prohibited interval and advancing the restart time to the maximum possible limit, while still keeping down the wear on the starter and keeping the load thereupon within an allowable range.

SOLUTION TO TECHNICAL PROBLEM

In order to attain the object described above, the present invention provides an engine starter employed in an automobile that is equipped with an idling stop system that operates according to a method of automatically stopping an engine when an idling stop condition is satisfied during engine operation, meshing a pinion gear of a starter with a ring gear of the engine when a restart request has been issued, and restarting the engine by starting cranking by transmitting rotational power of a motor to the engine, comprising: an engine rotation detection unit that detects engine rotation; and a control unit that, in a reverse rotation region directly before the engine stops completely when being stopped automatically, prohibits starting of shifting of the pinion gear during an interval of equal to or less than a predetermined negative rotation that is taken as a starter drive prohibited interval; and that, in a region other than the starter drive prohibited interval, starts shifting of the pinion gear immediately in response to an engine restart request, thus connecting the pinion gear with the ring gear and starting the engine; and that controls restarting of the engine on the basis of the engine rotational speed detected by the engine rotation detection unit.

With this structure, while keeping down the wear upon the starter and the load thereupon to a permitted range, it is possible to reduce the starter drive prohibited interval, thus advancing the restart time to the maximum possible limit.

ADVANTAGEOUS EFFECTS OF INVENTION

According to the present invention, while keeping down the wear upon the starter and the load thereupon to a permitted range, it is possible to reduce the starter drive prohibited interval, thus advancing the restart time to the maximum possible limit.

BRIEF DESCRIPTION OF DRAWINGS

[Fig. 1] Fig. 1 is a structural diagram of an engine starter according to an embodiment of the present invention.
[Fig. 2] Fig. 2 is a flow chart showing control operation performed by this engine starter according to an embodiment of the present invention.
[Fig. 3] Fig. 3 is an explanatory figure showing examples of prediction of engine rotation and of a starter drive signal that is outputted in a case of control by the engine starter according to this embodiment of the present invention.
[Fig. 4] Fig. 4 is an explanatory figure showing examples of prediction of engine rotation and of a starter drive signal that is outputted in a case of control by the engine starter according to this embodiment of the present invention.
[Fig. 5] Fig. 5 is an explanatory figure showing examples of prediction of engine rotation and of a starter drive signal that is outputted in a case of control by the engine starter according to this embodiment of the present invention.
[Fig. 6] Fig. 6 is an explanatory figure showing examples of prediction of engine rotation and of a starter drive signal that is outputted in a case of control by the engine starter according to this embodiment of the present invention.
[Fig. 7] Fig. 7 is an explanatory figure showing examples of prediction of engine rotation and of a starter drive signal that is outputted in a case of control by the engine starter according to this embodiment of the present invention.
[Fig. 8] Fig. 8 is an explanatory figure showing examples of prediction of engine rotation and of a starter drive signal that is outputted in a case of control by the engine starter according to this embodiment of the present invention.
[Fig. 9] Fig. 9 is an explanatory figure showing examples of prediction of engine rotation and of a starter drive signal that is outputted in a case of control by the engine starter according to this embodiment of the present invention.
[Fig. 10] Fig. 10 is an explanatory figure showing examples of prediction of engine rotation and of a starter drive signal that is outputted in a case of control by the engine starter according to this embodiment of the present invention.
[Fig. 11] Fig. 11 is an explanatory figure showing an interval in which starting of shifting of a pinion gear is prohibited in a case of control by the engine starter according to this embodiment of the present invention.
[Fig. 12] Fig. 12 is a figure for explanation of a method of predicting the behavior of engine rotation performed by the engine starter according to an embodiment of the present invention.
[Fig. 13] Fig. 13 is a figure for explanation of a method of predicting the behavior of engine rotation performed by the engine starter according to an embodiment of the present invention.
[Fig. 14] Fig. 14 is an explanatory figure showing a variant embodiment of an engine starter according to an embodiment of the present invention.

DESCRIPTION OF EMBODIMENTS

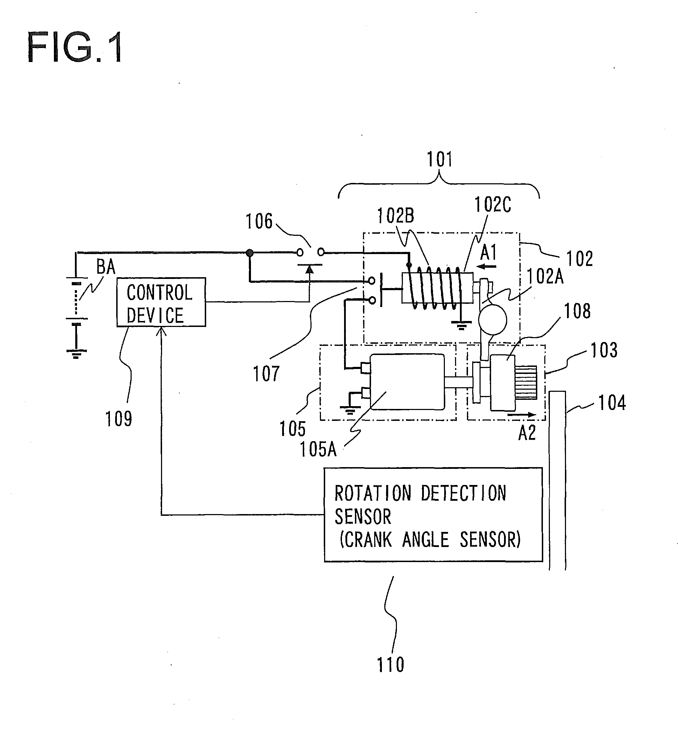

In the following, the structure and operation of an engine starter according to an embodiment of the present invention will be explained using Fig. 1 through Fig. 14.
First, the structure of an engine starter according to an embodiment will be explained using Fig. 1.
Fig. 1 is a structural diagram of an engine starter according to an embodiment of the present invention. Fig. 1 schematically shows an example of the overall system construction and the circuit connection of this engine starter according to an embodiment of the present invention.
As principal sections, the starter 101 comprises a magnetic switch 102, a pinion gear 103, and a motor body 105. The motor 105 is a so-called DC motor, and develops rotational power when DC voltage is supplied thereto. When required, the pinion gear 103 shifts along the rotation shaft of the motor in the direction shown by the arrow sign A2 due to the magnetic switch 102 pulling the lever 102A in the direction shown by the arrow sign A1, and meshes with a ring gear 104 that is directly coupled to the engine shaft. When this meshing has taken place, the motor 105A is rotated due to power being supplied to the motor body 105, and the rotary power of the motor 105A is transmitted via the pinion gear 103 to the ring gear 104, and thus causes the engine to rotate. In the state in which the engine is rotating, the engine can be started by supplying fuel to the engine and by igniting the fuel spray within the cylinders at predetermined timings. In addition to normal control of fuel injection, ignition and air (via electronic throttle control), the control device 109 also controls idling stopping and engine restarting after idling stopping, according to information of various types, such as the brake pedal state, the vehicle speed, and so on.

The pinion gear 103 is equipped with a one-way clutch 108. In other words, the rotary power of the motor 105A is transmitted via the one-way clutch 108 and the pinion gear 103 to the ring gear 104. However, in the state in which the ring gear 104 and the pinion gear 103 are meshed together, rotary power from the side of the ring gear 104 is intercepted by the one-way clutch 108, and accordingly is not transmitted to the side of the motor 105.

In the structure shown in Fig. 1, at the same time that the magnetic switch 102 shifts the pinion gear 103, the role of supplying electricity to the motor 105A is performed by closing the electrical contact points 107 of the magnetic switch 102. In other words, upon receipt of a drive signal from the control device 109, power is supplied from the battery BA via a relay circuit 106 to a solenoid coil 102B internal to the magnetic switch 102, so that a movable iron core 102C of the solenoid coil 102B is pulled inward. When the movable iron core 102C shifts, simultaneously with the shifting of the pinion gear 103, also the contact points 107 are closed by the movable iron core 102C, so that power supply to the motor 105A is performed from the battery BA. Accordingly, with the construction shown in this Fig. 1, the series of operations from shifting of the pinion gear 103 to supplying power to the motor 105A come to be performed by the single drive signal that is outputted from the control device 109.

It should be understood that, other than the circuit connections shown in Fig. 1, it would also be possible to provide a structure that, according to a signal from the control device 109, is capable of controlling the shifting of the pinion gear 103 and the supply of electricity to the motor 105 separately. If the shifting of the pinion gear 103 and the supply of electricity to the motor 105A are controlled separately, then it would also be acceptable to adopt a control method in which individual drive signals are outputted from the control device 109, for example a method in which a drive signal for the motor 105 is outputted after a fixed time period has elapsed from output of a drive signal for the pinion gear 103.

Furthermore, instead of the relay circuit 106 and the contact points 107, a switching element may be employed. By using a switching element that employs a semiconductor such as, for example, a MOSFET or the like, it would be possible to construct a more flexible control system for controlling the supplied current.

The rotation detection sensor 110 shown in Fig. 1 is a sensor for measuring the rotational speed of the engine (i.e. an engine rotation detection means). The output of this rotation detection sensor 110 is inputted to the control device 109, and is used in the control process as engine rotational speed information. It should be understood that, since the ring gear 104 is directly connected to the crank shaft of the engine, accordingly the rotational speed of the ring gear 104 and the engine rotational speed are synonymous.

Moreover, it should be understood that, if not only the rotational speed of the engine but also information about the angle of the crank shaft is required (in the following, this will be termed the "crank angle"), then, other than a sensor that is capable of detecting only the engine rotational speed, it is necessary to provide a crank angle sensor (i.e. a crank angle detection means), and to input its signal to the control device 109. If the sensor that is employed is of a type that is capable of simultaneously detecting both the engine rotational speed and also the crank angle position, then the signal from this one sensor may be inputted to the control device 109. It should be understood that, while this rotation detection sensor 110 is a device that is capable of detecting both forward rotation and also reverse rotation of the engine, there is no need necessarily to employ a sensor of a type that is capable of detecting reverse rotation of the engine. A reverse rotation detection method will be described hereinafter for the case in which a rotation sensor is employed of a type that cannot detect reverse rotation of the engine.

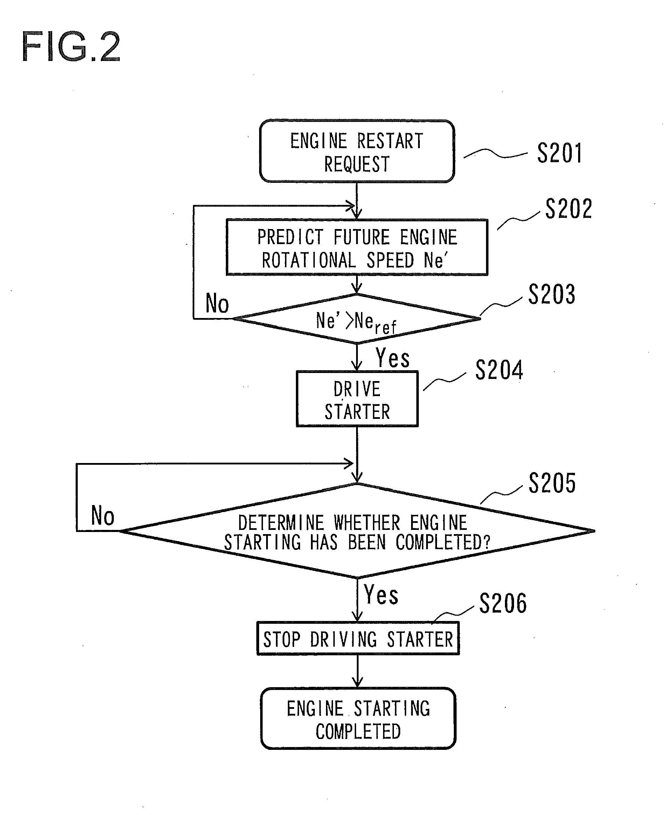

Next, the control operation provided by the engine starter according to this embodiment will be explained with reference to Fig. 2.

Fig. 2 is a flow chart showing control operation performed by the engine starter according to an embodiment of the present invention.

In a step S201 of Fig. 2, after a predetermined condition has become valid and fuel supply to the engine has been cut off, upon an engine restart request being issued due to driver operation or the like, the control device 109 performs the control of this embodiment. Apart from the control of this embodiment, after the engine restart request, control or the like is performed by the control device 109 in relation to combustion of the fuel supply or the fuel spray to the engine, such as by ignition or the like.

In the next step S202, the control device 109 predicts the future engine rotational speed Ne'. This future engine rotational speed Ne' is the engine rotational speed from the present time point until a predetermined time period has elapsed. The method for performing this prediction will be described hereinafter in concrete terms.

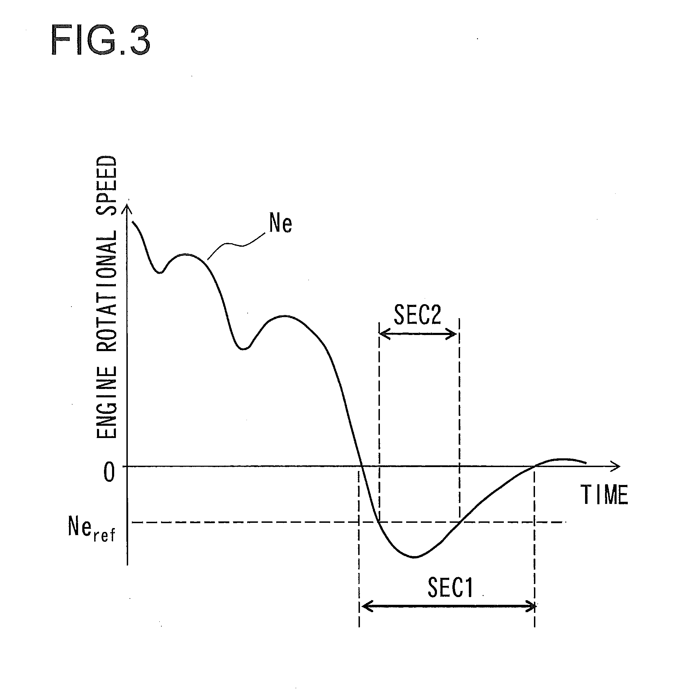

Next, in a step S203, the control device 109 compares together the future engine rotational speed Ne' that has been predicted and a predetermined reference engine rotational speed Neref, and makes a decision as to whether or not the predicted engine rotational speed Ne' is greater than the predetermined reference engine rotational speed Neref. In some cases the engine rotates forward, and in other cases the engine performs reverse rotation directly before it stops, and, if during forward rotation the engine rotational speed is taken to have a positive value while during reverse rotation the engine rotational speed is taken to have a negative value, then the reference engine rotational speed Neref is set to a negative value, in other words is set to be a predetermined reference value when the engine performs reverse rotation. And, when the engine is performing forward rotation with the engine rotational speed being positive, the predicted engine rotational speed Ne' exceeds the reference engine rotational speed Neref. Moreover, when the predicted engine rotational speed Ne' is negative, if the absolute value of the predicted engine rotational speed Ne' is smaller than the absolute value of the reference engine rotational speed Neref, then it is considered that the predicted engine rotational speed Ne' is exceeding the reference engine rotational speed Neref. Conversely if, with the predicted engine rotational speed Ne' being negative, the absolute value of the predicted engine rotational speed Ne' is larger than the absolute value of the reference engine rotational speed Neref, then it is determined that the predicted engine rotational speed Ne' is less than the reference engine rotational speed Neref. This relationship will be explained in detail with reference to Fig. 3, which will be described hereinafter.

And if, in the decision of the step S203, the predicted engine rotational speed Ne' is higher than the predetermined reference engine rotational speed Neref, then the flow of control proceeds to a step S204 in which the operation of driving the starter is commenced.

In this step S204, in concrete terms, the control device 109 starts the supply of electricity to the magnetic switch 102, and thus pushes the pinion gear 103 outward and causes it to become meshed with the ring gear 104. In the case of an engine for a passenger car, the predetermined engine rotational speed Neref may, for example, be set to -100 r/min.

However if, in the step S203, the predicted engine rotational speed Ne' is less than the predetermined engine rotational speed Neref, then the starter is not driven, and the flow of control returns to the step S202 and prediction of the future engine rotational speed Ne' is continued. In other words, starter driving is prohibited until the predicted engine rotational speed Ne' becomes higher than the predetermined engine rotational speed Neref.

After the pinion gear 103 of the starter has become meshed with the ring gear 104, then, by supplying electricity to the motor, rotary power is transmitted from the motor to the engine, and, by starting cranking, the engine is started.

In the next step S205 the control device 109 determines whether or not engine starting has been completed, and, if it is determined that engine starting has been completed, then the flow of control proceeds to a step S206 and driving of the starter is stopped and control terminates. This engine starting completion determination shown in the step S205 may, for example, be performed by determining that engine starting has been completed by the engine rotational speed having risen above some predetermined rotational speed.

Next, examples of prediction of engine rotation and of starter drive signals that are outputted in the case of control by the engine starter according to this embodiment will be explained with reference to Fig. 3 through Fig. 10.

Fig. 3 through Fig. 10 are explanatory figures showing examples of prediction of engine rotation and of starter drive signals that are outputted in various cases of control by the engine starter according to an embodiment of the present invention.

First, an example in which the engine rotational speed changes after the condition for idling stop becomes valid and the supply of fuel to the engine has been cut off will be explained with reference to Fig. 3.

In Fig. 3, time is shown along the horizontal axis and the engine rotational speed is shown along the vertical axis. And the solid line Ne in Fig. 3 represents the engine rotational speed.

Engine rotation continues after the fuel supply is cut off due to inertia, and the engine rotational speed Ne approaches zero while pulsating (in other words, after the engine rotational speed has decreased through positive values, temporarily the engine rotates in reverse and its rotational speed assumes negative values, and subsequently the engine rotates forward again, while the absolute value of the rotational speed gradually becomes smaller). Thus, in a section SEC1 directly before the engine stops perfectly, the engine rotational speed Ne rotates in reverse. The predetermined reference engine rotational speed Neref that is used in the starter drive prohibition decision may, for example, be set to an engine rotational speed of -100 r/min (100 r/min of rotation in reverse). In this case, if the rotational speed of the ring gear 104 when the pinion gear 103 and the ring gear 104 come into contact is greater than or equal to Neref, this means that the wear and the noise due to contacting between the pinion gear 103 and the ring gear 104 are within permitted ranges.

If the starter and the engine are connected during reverse rotation of the engine, the higher the speed of this reverse rotation becomes, the easier it becomes for wear upon the gears to take place and the higher the noise while they are connected becomes, and sometimes, in the worst case, the gears are damaged or fail or the like. However, according to research performed by the present inventors, it has been understood that, if during connection the engine rotational speed is greater than or equal to a fixed value in the reverse rotational direction, then it is possible for the wear upon the gears to be kept within the permitted range and also for the noise to be kept at a low level, even though the starter is connected during this engine reverse rotation. Thus, a reference engine rotational speed Neref is used as the reference value for determining the range, within which, even during the interval in which the engine is rotating in reverse, the noise and the wear upon the gears can be kept within the permitted range. If the rotational speed of the ring gear 104 when the pinion gear 103 and the ring gear 104 come into contact is greater than or equal to the reference engine rotational speed Neref, then it is possible to keep the wear and the noise due to this contact between the pinion gear 103 and the ring gear 104 within the permitted range.

The influence of reverse engine rotation is the greatest (i.e. the rotational speed of the engine during reverse rotation is the highest) in the case of a three cylinder engine that is intended for use in a passenger car. With a three cylinder engine, for example, it is possible to set the reference engine rotational speed Neref to the range of -200 r/min to -30 r/min. However since, in the case of a six cylinder engine or a four cylinder engine, the engine rotational speed during reverse engine rotation is lower than in the case of a three cylinder engine, accordingly, as compared to the three cylinder case, the reference engine rotational speed Neref also can be set to a smaller value (in other words to a value whose absolute value is smaller, i.e. closer to 0 r/min).

Moreover, it would also be acceptable to arrange to change the reference engine rotational speed Neref in an appropriate manner on the basis of information specifying the state of the vehicle, such as the temperature of the engine or the load upon it, or the state of the battery or the like. For example, since restarting of the engine is difficult when the temperature of the engine is low, accordingly in this case the reference engine rotational speed Neref may be set to a smaller value (in other words to a value whose absolute value is smaller, i.e. is closer to 0 r/min), as compared to when the temperature of the engine is high. Moreover, since restarting of the engine is difficult when the voltage of the battery is low, accordingly in this case as well the reference engine rotational speed Neref may be set to a smaller value (in other words to a value whose absolute value is smaller, i.e. closer to 0 r/min), as compared to when the voltage of the battery is high.

In the example of behavior of the engine rotation shown in Fig. 3, it will be understood that the region that is lower than the predetermined engine rotational speed Neref is around half of the engine reverse rotation interval SEC1. While it is desirable accurately to avoid the region SEC2 that is lower than the predetermined engine rotational speed Neref, actually a delay time period occurs from when the control device outputs a signal for starting the shifting of the pinion gear until the pinion gear 103 reaches the ring gear 104. Due to this, in this embodiment, the rotational speed of the ring gear 104 at the timing at which the pinion gear 103 arrives at the ring gear 104 is predicted in advance, and the decision for starting shifting of the pinion is performed based thereupon.

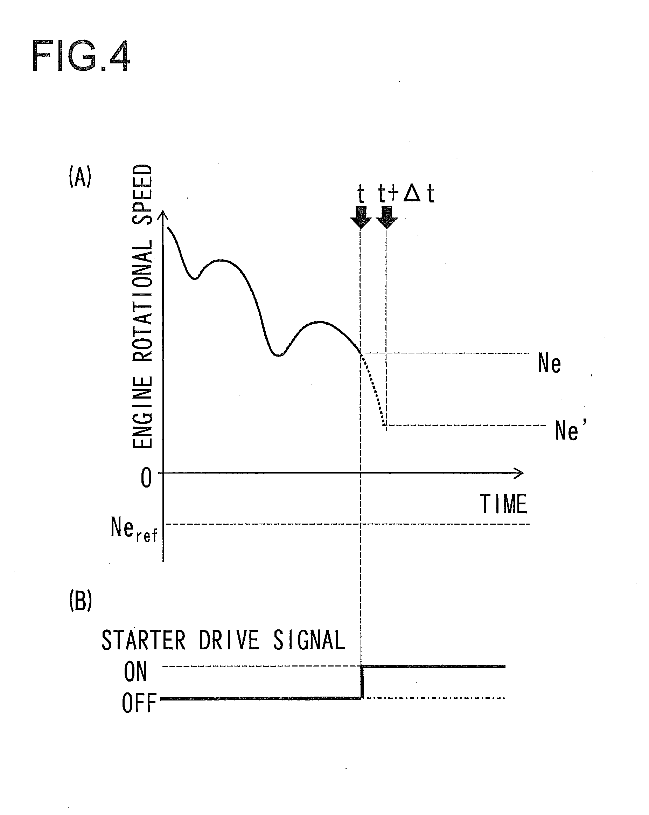

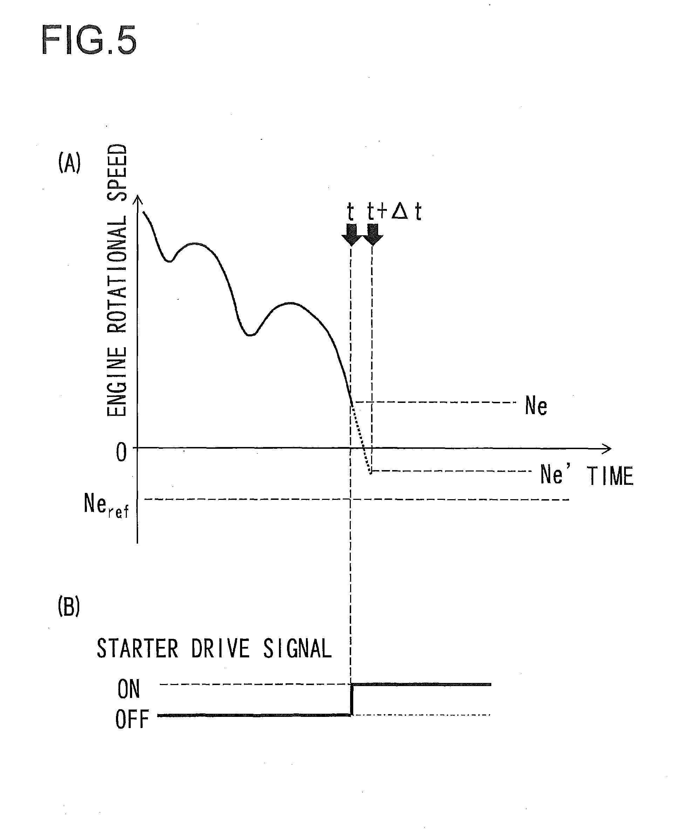

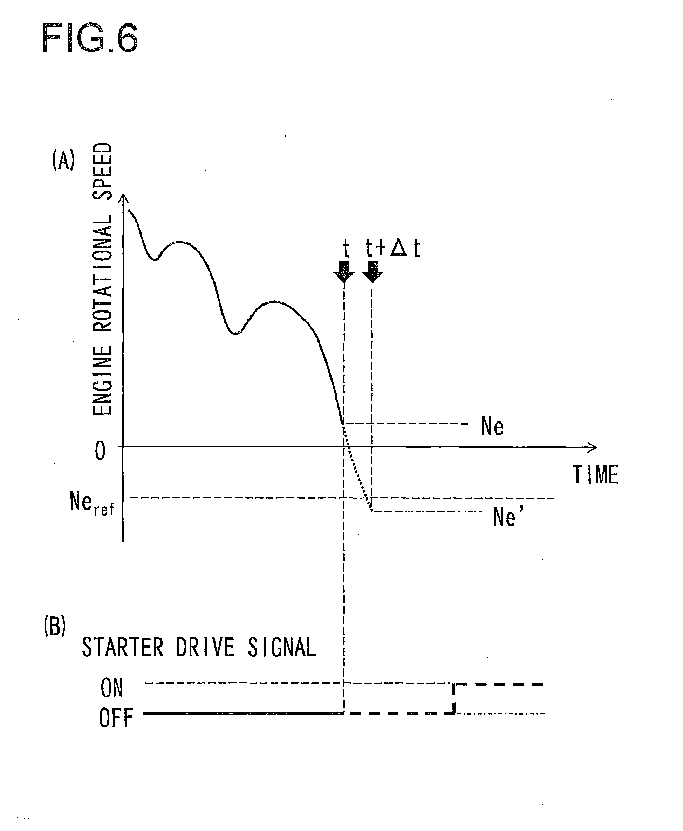

Next, the control behavior according to the present invention when an engine restart request has been issued while the engine rotation is rotating forward will be explained with reference to Fig. 4 through Fig. 6. Fig. 4 shows an example in which the predicted Ne' is positive; Fig. 5 shows an example in which the predicted Ne' is negative and moreover is higher than Neref, and Fig. 6 shows an example in which the predicted Ne' is lower than Neref. Fig. 4(A) shows the engine rotational speed and Fig. 4(B) shows how the starter drive signal goes ON and OFF. The same holds for Fig. 5(A), Fig. 5(B), Fig. 6(A), and Fig. 6(B).

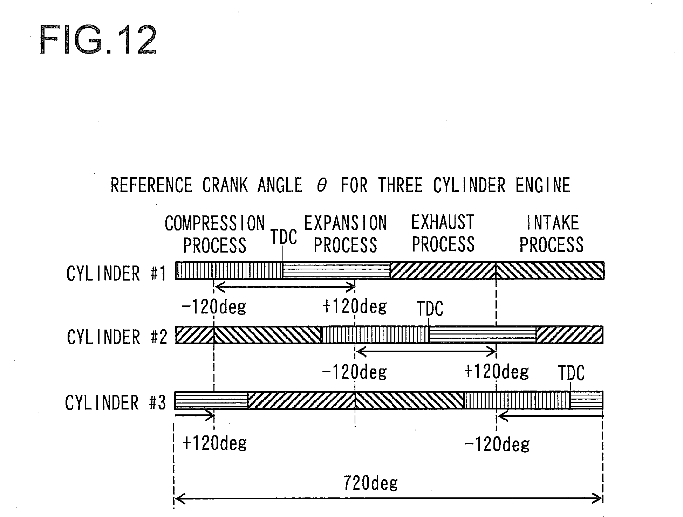

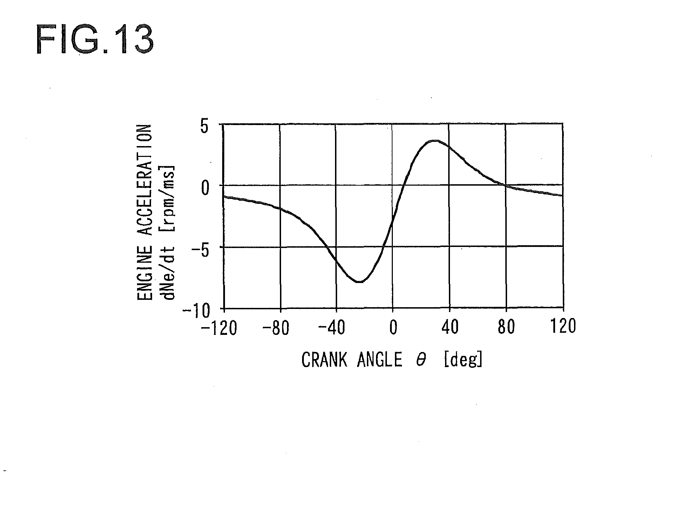

With the control of this embodiment, when an engine restart request is issued at the timing shown by the time point t in Fig. 4(A), then the engine rotational speed Ne' at the time point t+Δt that is Δt seconds later than the time point t is predicted using the engine rotational speed Ne at the timing shown by the time point t. The predicted behavior of the engine rotation in the future from the time point t is shown by the broken line, and it will be supposed that, at the time point t+Δt, the predicted future engine rotational speed at that time is Ne'. Δt is the shifting delay interval for the pinion gear 103, and is the time interval from when the drive signal to the magnetic switch 102 is outputted until the pinion gear 103 actually makes contact with the ring gear 104. The method for this prediction of the future engine rotational speed will be described hereinafter with reference to Fig. 12 and Fig. 13.

As shown in the step S203 of the control flow chart shown in Fig. 2, the control method of this embodiment decides upon driving of the starter by comparing together the predicted future engine rotational speed Ne' and the predetermined engine rotational speed Neref. Since, as shown by the starter drive signal of Fig. 4(B), Ne'>Neref holds in this case, accordingly the starter drive signal goes to ON immediately in response to the engine restart request that is issued at the time point t, so that engine restarting is commenced.

It should be understood that, in the case of a structure in which it is possible to control the shifting of the pinion gear 103 of the starter and the supply of electricity to the motor 105 separately by signals from the control device 109, then, in the case shown in Fig. 4, it would be acceptable to arrange first to perform supply of electricity to the motor, and then to push the pinion gear 103 outward so as to connect it with the ring gear 104 after rotation of the motor has commenced at the timing at which the rotation of the pinion gear 103 and the rotation of the ring gear 104 become synchronized.

With the control of this embodiment, when an engine restart request is issued at the timing t shown in Fig. 5(A), then, in a similar manner, the engine rotational speed Ne' at the time point t+Δt that is Δt seconds later than the time point t is predicted using the engine rotational speed Ne at the timing shown by the time point t. As shown in Fig. 5(A), the Ne' that is predicted in this case is negative; in other words, it is predicted that the engine will rotate in reverse. Even if the predicted Ne' is negative, since, in a similar manner to the above, the relationship Ne'>Neref with respect to the predetermined engine rotational speed Neref holds, accordingly, as shown in Fig. 5(B), the starter drive signal goes to ON immediately in response to the engine restart request that is issued at the time point t, so that engine restarting is commenced. Actually the pinion gear 103 meshes with the ring gear 104 during its reverse rotation at the timing shown by the time point t+Δt, and the engine is restarted. By contrast to the way in which, in the prior art, connection of the starter during engine reverse rotation was avoided in this type of condition, in this embodiment, it is possible to make the restart time be earlier by connecting the starter and performing engine restarting.

With the control of this embodiment, when an engine restart request is issued at the timing t shown in Fig. 6(A), then, in a similar manner, the engine rotational speed Ne' at the time point t+Δt that is Δt seconds later than the time point t is predicted using the engine rotational speed Ne at the timing shown by the time point t. As shown in Fig. 6(A), the Ne' that is predicted in this case is negative; in other words, it is predicted that the engine will rotate in reverse. Since the relationship Ne'<Neref with respect to the predetermined engine rotational speed Neref holds, accordingly, as shown in Fig. 6(B), driving of the starter in response to the engine restart request that is issued at the time point t is prohibited in the control of this embodiment. As shown in the step S203 of the control flow chart shown in Fig. 2, no starter drive signal is outputted, and the flow of control returns to the step S202 and prediction of the future engine rotational speed is continued. In this case, although the engine rotational speed Ne is still rotating forward, nevertheless driving of the starter is prohibited, since the resulting rotational speed Ne' that is predicted is less than the predetermined rotational speed Neref. The prediction of the future engine rotational speed is continued, and, as shown by the broken line in Fig. 6(B), an ON starter drive signal is outputted at the time point that the resulting predicted rotational speed Ne' becomes higher than the predetermined rotational speed Neref, so that the engine is restarted.

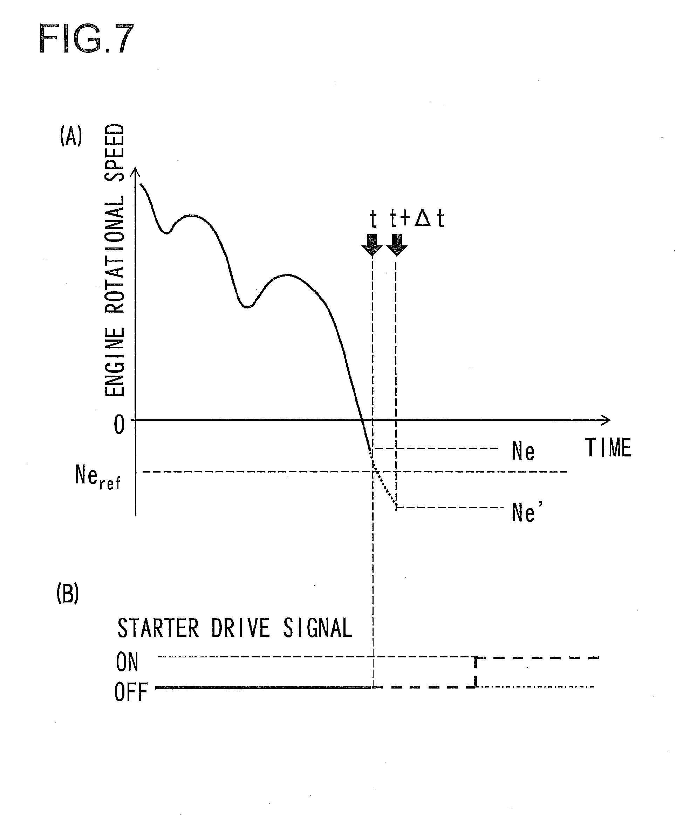

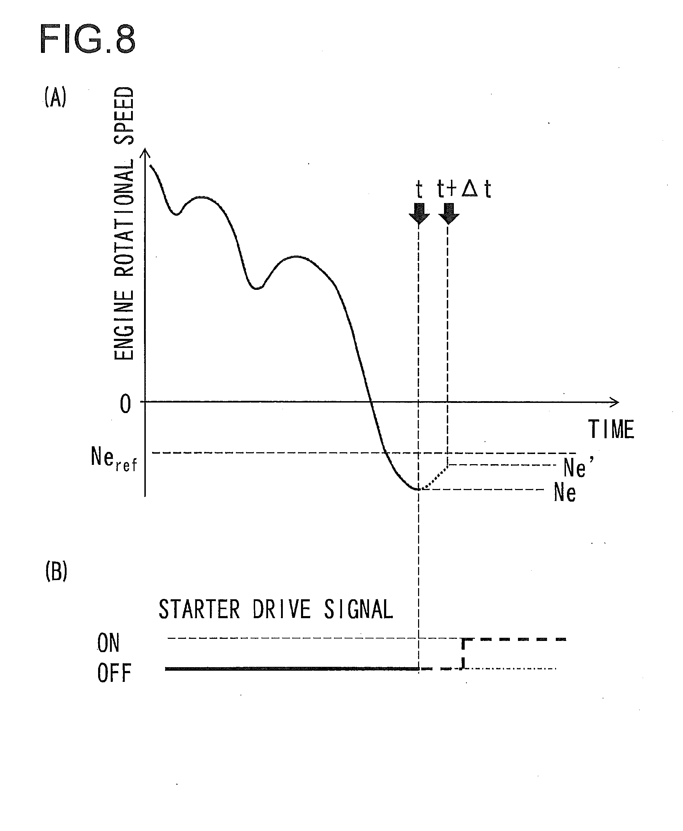

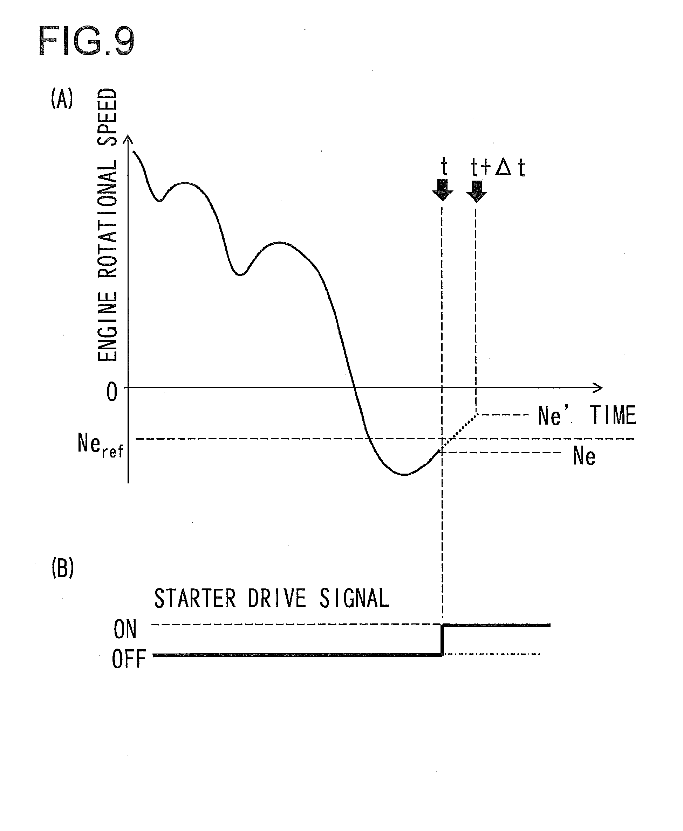

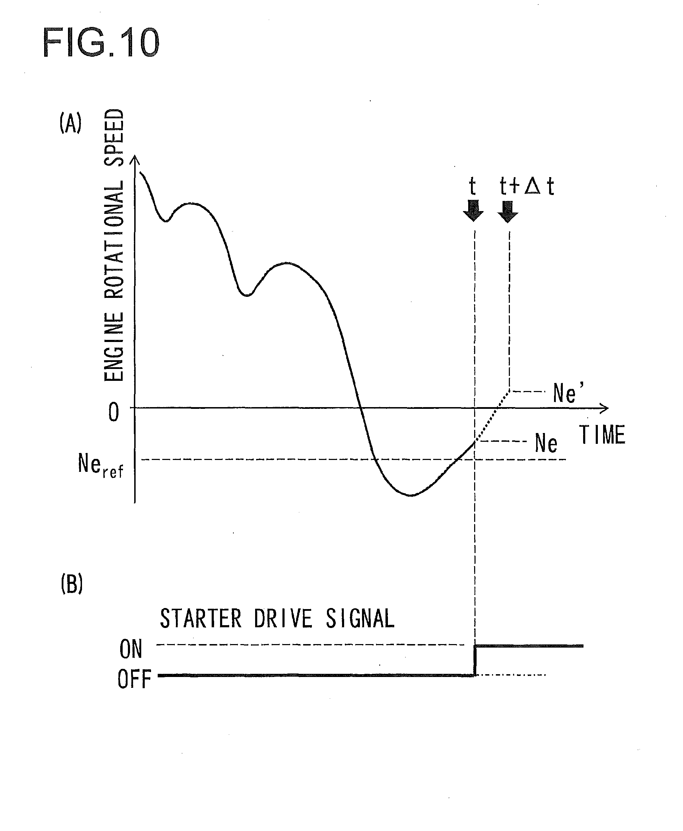

Next, the control behavior according to this embodiment when an engine restart request has been issued while the engine is rotating in reverse will be explained with reference to Fig. 7 through Fig. 10. Fig. 7 is a case in which Ne>Neref, Fig. 8 is an example in which Ne'<Neref and moreover Ne<Neref, Fig. 9 is an example in which Ne'>Neref and moreover Ne<Neref, and Fig. 10 is an example in which Ne'>0 and moreover Ne<0.

With the control of this embodiment, when an engine restart request is issued at the timing t shown in Fig. 7(A), then, in a similar manner, the engine rotational speed Ne' at the time point t+Δt that is Δt seconds later than the time point t is predicted using the engine rotational speed Ne at the timing shown by the time point t. In this case shown in Fig. 7(A), the future engine rotational speed is predicted from the engine rotational speed during rotation that is already in reverse. Since, for the predicted future engine rotational speed Ne', the relationship Ne'<Neref holds with respect to the predetermined engine rotational speed Neref, accordingly, as shown in Fig. 7(B), driving of the starter in response to the engine restart request that is issued at the time point t is prohibited in the control of this embodiment. As shown in the step S203 of the control flow chart shown in Fig. 2, no starter drive signal is outputted, and the flow of control returns to the step S202 and prediction of the future engine rotational speed is continued. The prediction of the future engine rotational speed is continued, and, as shown by the broken line in Fig. 7(B), an ON starter drive signal is outputted at the time point that the resulting predicted rotational speed Ne' becomes higher than the predetermined rotational speed Neref, so that the engine is restarted.

With the control of this embodiment, when an engine restart request is issued at the timing t shown in Fig. 8(A), then, in a similar manner, the engine rotational speed Ne' at the time point t+Δt that is Δt seconds later than the time point t is predicted using the engine rotational speed Ne at the timing shown by the time point t. Since, for the predicted future engine rotational speed Ne', the relationship Ne'<Neref with respect to the predetermined engine rotational speed Neref holds, accordingly in the control of this embodiment, as shown in Fig. 8(B), driving of the starter in response to the engine restart request that is issued at the time point t is prohibited. As shown in the step S203 of the control flow chart, no starter drive signal is outputted, and the flow of control returns to the step S202 and prediction of the future engine rotational speed is continued. The prediction of the future engine rotational speed is continued, and, as shown by the broken line in Fig. 8(B), an ON starter drive signal is outputted at the time point that the resulting predicted rotational speed Ne' becomes higher than the predetermined rotational speed Neref, so that the engine is restarted.

With the control of this embodiment, when an engine restart request is issued at the timing t shown in Fig. 9(A), then, in a similar manner, the engine rotational speed Ne' at the time point t+Δt that is Δt seconds later than the time point t is predicted using the engine rotational speed Ne at the timing shown by the time point t. Since, for the predicted future engine rotational speed Ne', the relationship Ne'>Neref with respect to the predetermined engine rotational speed Neref holds, accordingly in the control of this embodiment, as shown in Fig. 9(B), the starter drive signal goes to ON immediately in response to the engine restart request that is issued at the time point t, so that engine restarting is commenced. Actually the pinion gear 103 meshes with the ring gear 104 that is rotating in reverse at the timing shown by the time point t+Δt, and the engine is restarted. By contrast to the way in which, in the prior art, connection of the starter during engine reverse rotation was avoided in this type of condition, in this embodiment, it is possible to make the restart time be earlier by connecting the starter and performing engine restarting.

With the control of this embodiment, when an engine restart request is issued at the timing t shown in Fig. 10(A), then, in a similar manner, the engine rotational speed Ne' at the time point t+Δt that is Δt seconds later than the time point t is predicted using the engine rotational speed Ne at the timing shown by the time point t. Since, for the predicted future engine rotational speed Ne', the relationship Ne'>Neref with respect to the predetermined engine rotational speed Neref holds, accordingly, as shown in Fig. 10(B), the starter drive signal goes to ON immediately in response to the engine restart request that is issued at the time point t, so that engine restarting is commenced. Actually the pinion gear 103 meshes with the ring gear 104 that has completely stopped or is rotating forward at the timing shown by the time point t+Δt, and the engine is restarted.

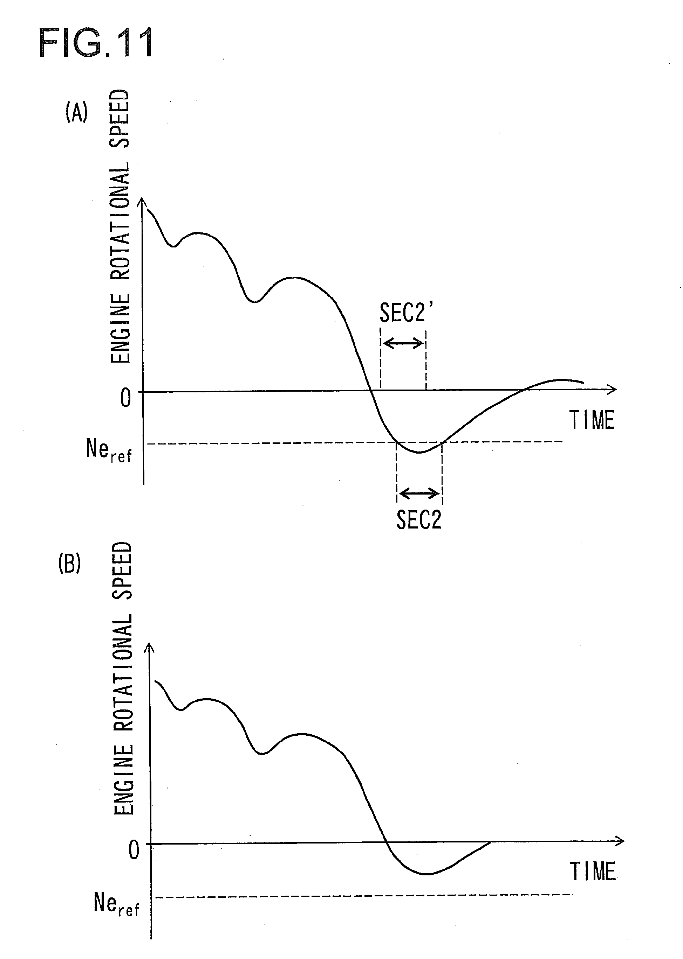

Next an example of an interval in which, when this embodiment is implemented, starting of shifting of the pinion gear 103 has been prohibited as a result, will be explained with reference to Fig. 11.

Fig. 11 is a figure for explanation of the interval, during control by the engine starter according to an embodiment of the present invention, in which starting of shifting of the pinion gear is prohibited.

In Fig. 11 (A), by contrast to the region SEC2 in which the engine rotational speed Ne is lower than the predetermined engine rotational speed Neref, actually the interval in which starting of shifting of the pinion gear 103 is prohibited is the region SEC2'. Since the behavior of the engine rotation is different each time automatic stopping of the engine is performed, accordingly the variation each time from the region SEC2 in which the engine rotational speed Ne is lower than the predetermined engine rotational speed Neref is also different for each interval SEC2' in which starting of shifting of the pinion gear 103 is prohibited.

In the engine rotation behavior shown in Fig. 11 (B), the engine reverse rotation interval is shorter, and the reverse rotational speed also does not drop below the predetermined engine rotational speed Neref. In this case, with the control according to this embodiment, starting of shifting of the pinion gear 103 is never prohibited.

In the prior art, in the case shown in Fig. 11(B), connection of the starter was avoided during reverse rotation of the engine. By contrast, as described above, in this embodiment, it is possible to restart the engine immediately in response to a restart request, over the entire engine reverse rotation interval, without any prohibition at all being imposed upon connection of the starter. In other words, in this embodiment, by predicting the engine rotational speed, it is possible to determine whether or not a region in which connection of the starter is prohibited should be present, according to the behavior of the engine rotational speed.

Next, the method according to which the behavior of engine rotation is predicted by the engine starter according to this embodiment will be explained with reference to Fig. 12 and Fig. 13.

Fig. 12 and Fig. 13 are figures for explanation of a method of predicting the behavior of engine rotation performed by the engine starter according to an embodiment of the present invention.

Information specifying the engine rotational speed being measured and information specifying the crank angle are used during prediction of the engine rotational speed. While prediction may be performed on the basis of these two types of information with the function shown in Fig. 13, at this time, the reference crank angle that is used is taken as shown in Fig. 12. While the example of a three cylinder engine is assumed in this explanation, the approach is the same for any other number of cylinders.

In Fig. 12, when the first cylinder starts at the compression process, the engine then continues to the expansion process, the exhaust process, and the intake process, thus going through one cycle, and thereafter repeats these processes in order from the above initial state. At the instant at which the compression process ends and the expansion process starts, the piston of the engine arrives at top dead center (TDC). Since with a four cycle engine one cycle is performed over two full turns of crank angle, accordingly 720° of crank angle constitute one cycle. With a three cylinder engine, the phases of the cylinders mutually differ by just one third of this angle, in other words by just 240°. Accordingly, the TDC of the first cylinder, the TDC of the second cylinder, and the TDC of the third cylinder mutually differ from one another in phase by 240°. While, in addition to the TDC timing shown in the figure, the arrivals of the pistons in the various cylinders at their top dead centers are also the instants at which their exhaust processes end, here, particular attention will be directed to the TDC at the end of this compression process. When combustion is not being performed, the pressure within the cylinder is highest at the instant of TDC which is the end of the compression process, and the pressure within the cylinder from before to after this point constitutes a pressing force on the piston and governs the rotational behavior of the engine. Accordingly, the TDC at the end of the compression process is taken as a reference for the crank angle of the engine, with the crank angle at this TDC being taken as 0°, and with the crank angle of the engine being expressed by the crank angle of the cylinder in a range from 120° before the TDC to 120° after the TDC. Accordingly, after the state has been passed in which the description of the crank angle of the engine is expressed in terms of the first cylinder, subsequently the crank angle of the engine is described with reference to the TDC of the second cylinder, and thereafter it is described with reference to the third cylinder, the basis of description thus being repeated cyclically.

The function for predicting the rotational behavior of the engine will now be explained with reference to Fig. 13, using the crank angle specified by Fig. 12. In the graph shown in Fig. 13, the crank angle is shown along the horizontal axis, while the engine acceleration (which is equal to the rate of change of the rotational speed) is shown along the vertical axis. It is considered that, if no combustion is taking place in the engine, then the engine will execute behavior according to the acceleration shown here, so that the rotational behavior of the engine can be predicted. In other words, it is considered that the behavior while the engine is stopping will be according to the function shown in Equation (1).

[Math. 1]

$$\frac{dNe}{dt} = func(\theta, Ne) \qquad \cdots\cdots(1)$$

The concrete details of Equation (1) are as given by Equation (2), so that the acceleration of the engine is principally determined by crank angle, as shown graphically in Fig. 13.

[Math. 2]

$$func(\theta, Ne) = a_0 + a_1 \times \cos(\pi \times \frac{\theta}{120}) \quad + b_1 \times \sin(\pi \times \frac{\theta}{120})$$
$$+ a_2 \times \cos(\pi \times \frac{\theta}{120} \times 2) + b_2 \times \sin(\pi \times \frac{\theta}{120} \times 2)$$
$$+ a_3 \times \cos(\pi \times \frac{\theta}{120} \times 3) + b_3 \times \sin(\pi \times \frac{\theta}{120} \times 3)$$
$$+ a_4 \times \cos(\pi \times \frac{\theta}{120} \times 4) + b_4 \times \sin(\pi \times \frac{\theta}{120} \times 4) \quad \cdots(2)$$

Since, with a three cylinder engine, the same state is repeated at each 240° of crank angle, accordingly the function is described using Fourier series by taking 240° as one period. The form of the function could also be expressed using some type of function other than Fourier series. The coefficients a1 through a4 and b1 through b4 are constants, and the coefficient a0, which is a constant component, changes according to the engine rotational speed as shown by Equation (3):

[Math. 3]

$$a_0 = \begin{cases} - c & (Ne \geq k) \\ - c \cdot Ne/k & (|Ne| < k) \\ + c & (Ne \leq -k) \end{cases} \qquad \cdots(3)$$

In Equation (3), the coefficients c and k are positive constant values. In other words, when the engine is rotating forward, the constant component of the acceleration is given by a negative value, while, when the engine is rotating backward, the constant component of the acceleration is given by a positive value. While, in Equation (3), the transition between forward rotation and reverse rotation is expressed by a linear function, it would also be possible, alternatively, to describe this by a function that has hysteresis. Moreover, it would also be possible to employ a method in which the coefficients a1 through a4 and b1 through b4 in Equation (2) are varied according to the engine rotational speed.

It should be understood that the engine rotational speed Ne [r/min] and the crank angle $\theta$ [°] are linked together by the relationship of Equation (4):

[Math. 4]

$$Ne = \frac{1}{6}\frac{d\theta}{dt} \qquad \cdots(4)$$

If the engine rotational speed Ne and the crank angle θ at the time point t are known according to information inputted to the control device, then the method for obtaining the engine rotational speed and the crank angle after a time Δt is given by the functions shown in Equations (5) and (6):

[Math. 5]

$$Ne(t + \Delta t) = Ne(t) + \int_{t}^{t+\Delta t} func(\theta, Ne)\, dt \quad \cdots(5)$$

[Math. 6]

$$\theta(t + \Delta t) = \theta(t) + 6\int_{t}^{t+\Delta t} Ne\, dt \quad \cdots\cdots(6)$$

Equation (5) is Equation (1) integrated with respect to time, and Equation (6) is Equation (4) integrated with respect to time. The stopping behavior of the engine is measured in advance, and, if the coefficients of Equation (2) and Equation (3) are determined, then it is possible to integrate Equation (5) and Equation (6) numerically, and it becomes possible to predict the engine behavior by calculating these integrations.

It should be understood that, since during control in real time the burden of calculation for calculation of this integration is high, so that a high priced computer is required, accordingly, if the integration calculation is performed in advance and the results are stored in a table, then, during real time control, it is possible to obtain calculation results that are equivalent to calculation of the integration described above by referring to this table and by performing an interpolation calculation upon the tabular values. Since this calculation can be solved if the engine rotational speed Ne and the crank angle 0 are given as initial conditions, accordingly, if the calculations are performed in advance with the engine rotational speed Ne, the crank angle θ, and the time period for prediction Δt being taken as parameters, and a control device is provided in which these calculation results are stored as a table, then it becomes possible to predict the rotational speed behavior of the engine in a simple and easy manner.

Moreover, it will be understood from Equation (6) that it is possible to predict the future crank angle at the same time as performing the method described above for prediction of the engine rotational speed. Due to this, it is also possible to provide a starter drive prohibited interval by employing the future crank angle, in a similar manner to the case with the engine rotational speed. Since the load when driving the engine is determined by the crank angle, in other words by the positions of the pistons, accordingly, when the starter is driving the engine, in order to avoid excessively great load, it is best to connect them together while avoiding a specified range of crank angle. For example, when taking the TDC as a reference, the specified range of crank angle may be from -10° to 0°. In a decision upon a starter drive prohibited interval as shown in the step S203 of the control flow, by deciding upon the starter drive prohibited interval using the crank angle in addition to the engine rotational speed, it becomes possible to avoid imposition of an excessively great load upon the starter.

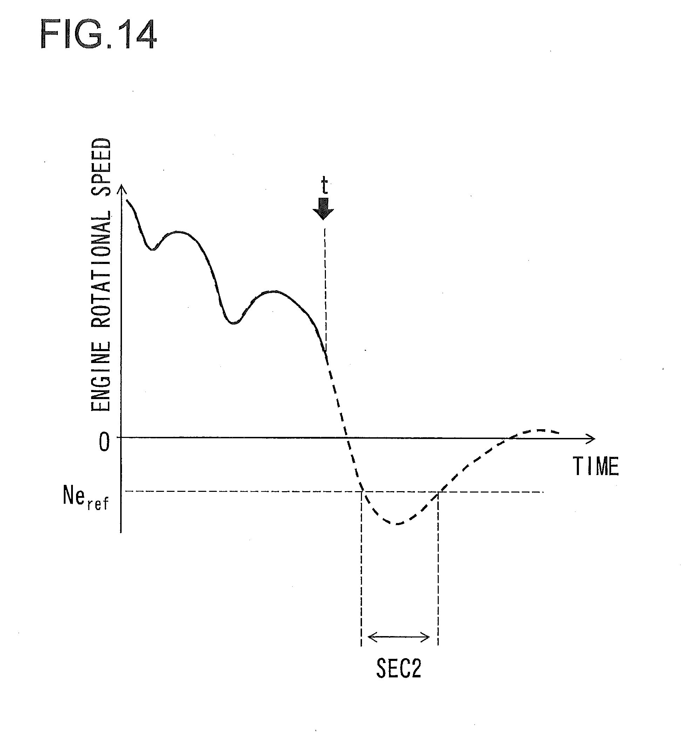

Next, a variant embodiment of the engine starter according to the above embodiment will be explained with reference to Fig. 14.

Fig. 14 is a figure for explanation of this variant embodiment of the engine starter according to an embodiment of the present invention.

While, in this embodiment, it is desirable to employ a rotation sensor that is capable of detecting rotation of the engine not only forward but also in the reverse rotational direction, on the other hand, by predicting the rotational speed of engine reverse rotation by using the method described above of predicting the future engine rotational speed, it would also be acceptable to arrange to employ a rotation sensor that is capable only of detecting forward rotation.

Fig. 14 is a figure for explanation of the control method when a rotation sensor that is only capable of detecting forward engine rotation is employed. The engine rotational speed Ne shown in Fig. 14 is measured using this rotation sensor, and the method described above for prediction of the future engine rotational speed at the timing t based thereupon is employed. At the timing shown by the time point t, the behavior of the rotational speed from the time point t until the engine stops completely is predicted. This predicted engine rotational speed behavior may, for example, be as shown by the broken line. Subsequently to the time point t the rotation detection sensor is not used, and instead it is possible to perform control using the predicted engine rotational speed. At this time, i.e. at the timing t, it is also possible to determine the region SEC2 in which the engine rotational speed will be less than or equal to the predetermined engine rotational speed Neref. Due to this, it is also possible to perform similar control using the predicted engine rotational speed, even if a rotation sensor of a type that is only capable of detecting forward engine rotation is employed.

In the example shown in Fig. 4, Δt is a shifting delay interval of the pinion gear 103, which is the time period from when the drive signal to the magnetic switch 102 is outputted until actually the pinion gear 103 comes into contact with the ring gear 104. This shifting delay interval is different for different starter. This interval varies according to the amount of displacement of the engine to be started, the ease of flow of current to the motor, and so on. The shifting delay interval Δt is generally of the order of 20 ms to 50 ms. If a shifting delay interval of this order is present, then it is appropriate for the starter drive signal to be changed to ON in order to restart the engine using a predicted engine rotational speed that is later by the shifting delay interval Δt.

However, depending upon the starter, in some cases the shifting delay interval Δt may be shorter than in the example described above, for example of the order of 10 ms. In this type of case, it would also be possible to change the starter drive signal to ON in order to restart the engine, not by employing the predicted engine rotational speed, but instead by employing the engine rotational speed that is detected just as it is. However, since in this case there is some shifting delay interval even though it is slight, it is desirable to make the predetermined reference engine rotational speed Neref that is used as a reference greater than in the cases described above. When, for example, in the examples previously described, -100 r/min was used as the reference engine rotational speed Neref, in this example Neref may be set to -50 r/min, for example.

As has been explained above, according to the embodiments, it is possible to shorten the engine restart time for the idling stop system. In other words, when an engine restart request has been issued during the engine reverse rotational interval, by shortening the starter drive prohibition interval to shorter than in the prior art, it is possible to commence the engine starting operation by driving the starter as early as practicable.

Moreover, if the starter drive prohibition interval is determined by also using the predicted future crank angle, then it is also possible to avoid imposition of an excessively great load upon the starter by avoiding crank angles at which the load is high.

Furthermore, if a sensor that is capable of detecting engine reverse rotation is not employed, then it is possible to reduce the cost entailed by the sensor.

REFERENCE SIGNS LIST

101     starter main body
102     magnetic switch
103     pinion gear
104     ring gear
105     DC motor
106     switch for supplying electricity to the magnetic switch
107     contact points for supplying electricity to the motor
108     one way clutch
109     control device
110     rotation detection sensor

**Claims**

1. An engine starter employed in an automobile that is equipped with an idling stop system that operates according to a method of automatically stopping an engine when an idling stop condition is satisfied during engine operation, meshing a pinion gear of a starter with a ring gear of the engine when a restart request has been issued, and restarting the engine by starting cranking by transmitting rotational power of a motor to the engine, comprising:

an engine rotation detection unit that detects engine rotation; and
a control unit that, in a reverse rotation region directly before the engine stops completely when being stopped automatically, prohibits starting of shifting of the pinion gear during an interval of equal to or less than a predetermined negative rotation that is taken as a starter drive prohibited interval; and that, in a region other than the starter drive prohibited interval, starts shifting of the pinion gear immediately in response to an engine restart request, thus connecting the pinion gear with the ring gear and starting the engine; and that controls restarting of the engine on the basis of the engine rotational speed detected by the engine rotation detection unit.

2. The engine starter according to Claim 1, wherein the control unit:

predicts a future engine rotational speed during reverse rotation according to the engine rotational speed and an angle of a crankshaft of the engine; and
controls engine restarting using this predicted future engine rotational speed during reverse rotation.

3. The engine starter according to Claim 2, wherein the control unit predicts the future engine rotational speed over a shifting delay interval from when the starter drive signal is outputted until the pinion gear of the starter arrives at the ring gear of the engine.

4. The engine starter according to Claim 2, wherein the control unit:

predicts a future crank angle in addition to the future engine rotational speed; and
sets a predetermined range of crank angle as the starter drive prohibited interval in addition to the interval of equal to or less than the predetermined negative rotation.

5. The engine starter according to Claim 2, wherein:

the engine rotation detection unit is a rotation sensor that is only capable of detecting forward engine rotation; and
before the reverse rotation region directly before the engine stops completely when being stopped automatically, and after the engine rotational speed has dropped below a predetermined rotational speed, the control unit predicts change of the engine rotational speed until the engine stops completely on the basis of the engine rotational speed and the crank angle at the time point that the engine rotational speed drops below the predetermined rotational speed, and controls engine restarting using this predicted engine rotational speed.

6. The engine starter according to Claim 1, wherein the control unit changes the value of the predetermined negative rotation on the basis of information specifying a state of the automobile.

7. The engine starter according to Claim 2, wherein:

the control unit predicts the future engine rotational speed during reverse rotation by using a definition equation that defines the rate of change of the engine rotational speed with respect to crank angle and engine rotational speed; and
in the definition equation, a constant component of the rate of change is a negative value when the direction of engine rotation is forward, and is a positive value when the direction of engine rotation is backward.

8. The engine starter according to Claim 1, wherein, in the reverse rotation region directly before the engine stops completely when being stopped automatically, in response to the engine restart request, the control unit determines upon the presence or absence of a starter drive prohibition region according to a predetermined decision.

9. An engine starting method employed in an automobile that is equipped with an idling stop system that operates according to a method of automatically stopping an engine when an idling stop condition is satisfied during engine operation, meshing a pinion gear of a starter with a ring gear of the engine when a restart request has been issued, and restarting the engine by starting cranking by transmitting rotational power of a motor to the engine, comprising:

prohibiting starting of shifting of the pinion gear during an interval of equal to or less than a predetermined negative rotation that is taken as a starter drive prohibited interval in a reverse rotation region directly before the engine stops completely when being stopped automatically;
starting shifting of the pinion gear immediately in response to an engine restart request in a region other than the starter drive prohibited interval, thus connecting the pinion gear with the ring gear and starting the engine; and
controlling restarting of the engine on the basis of the engine rotational speed detected by the engine rotation detection unit.

# FIG.1

# FIG.2

```
         ┌─────────────────────┐
         │   ENGINE RESTART    │ ~ S201
         │      REQUEST        │
         └──────────┬──────────┘
                    │
         ┌──────────▼──────────┐
         │ PREDICT FUTURE ENGINE│ ~ S202
         │ ROTATIONAL SPEED Ne' │
         └──────────┬──────────┘
    No             │
    ◄──────────◇ Ne'>Ne_ref ◇ ~ S203
                   │ Yes
         ┌─────────▼─────────┐
         │      DRIVE        │ ~ S204
         │     STARTER       │
         └─────────┬─────────┘
                   │
    No  ◇ DETERMINE WHETHER ENGINE ◇ ~ S205
    ◄───◇ STARTING HAS BEEN COMPLETED? ◇
                   │ Yes
         ┌─────────▼─────────┐
         │ STOP DRIVING STARTER │ ~ S206
         └─────────┬─────────┘
         ┌─────────▼─────────┐
         │  ENGINE STARTING  │
         │    COMPLETED      │
         └───────────────────┘
```

# FIG.3

# FIG.4

(A)

(B)

STARTER DRIVE SIGNAL

# FIG.5

(A)

(B)

STARTER DRIVE SIGNAL

ON

OFF

# FIG.6

(A)

ENGINE ROTATIONAL SPEED

$t$   $t+\Delta t$

Ne

0

TIME

$Ne_{ref}$

Ne'

(B)

STARTER DRIVE SIGNAL

ON

OFF

# FIG.7

(A)

ENGINE ROTATIONAL SPEED

t  t+Δt

0

TIME

Ne

Ne$_{ref}$

Ne'

(B)

STARTER DRIVE SIGNAL

ON

OFF

# FIG.8

(A)

ENGINE ROTATIONAL SPEED

t   t+△t

0

TIME

Ne$_{ref}$

Ne'

Ne

(B)

STARTER DRIVE SIGNAL

ON

OFF

# FIG.9

(A)

ENGINE ROTATIONAL SPEED

t    t+$\Delta$t

0

$Ne_{ref}$

Ne'  TIME

Ne

(B)

STARTER DRIVE SIGNAL

ON

OFF

# FIG.10

(A)

(B)

STARTER DRIVE SIGNAL

# FIG.11

(A)

(B)

# FIG.12

REFERENCE CRANK ANGLE $\theta$ FOR THREE CYLINDER ENGINE

# FIG.13

# FIG.14

## INTERNATIONAL SEARCH REPORT

International application No.

PCT/JP2013/075786

### A. CLASSIFICATION OF SUBJECT MATTER
*F02N11/08*(2006.01)i, *F02N15/00*(2006.01)i

According to International Patent Classification (IPC) or to both national classification and IPC

### B. FIELDS SEARCHED

Minimum documentation searched (classification system followed by classification symbols)
F02N11/08, F02N15/00

Documentation searched other than minimum documentation to the extent that such documents are included in the fields searched
Jitsuyo Shinan Koho          1922–1996     Jitsuyo Shinan Toroku Koho     1996–2013
Kokai Jitsuyo Shinan Koho     1971–2013     Toroku Jitsuyo Shinan Koho     1994–2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| E,X | WO 2013/150605 A1 (Mitsubishi Electric Corp.), 10 October 2013 (10.10.2013), paragraphs [0027] to [0029], [0040]; fig. 5 (Family: none) | 1-3,6,8-9 |
| P,A | WO 2013/021812 A1 (Mitsubishi Electric Corp.), 14 February 2013 (14.02.2013), paragraph [0010] (Family: none) | 1-9 |
| A | JP 4228882 B2 (Toyota Motor Corp.), 25 February 2009 (25.02.2009), paragraphs [0024] to [0025]; fig. 3 & US 2007/0084429 A1     & WO 2005/045239 A1 | 1-9 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 December, 2013 (18.12.13) | 07 January, 2014 (07.01.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005140030 A
- JP 2009002202 A